(19) Europäisches Patentamt
European Patent Office
Office européen des brevets

(11) **EP 2 443 433 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **10726898.9**

(22) Anmeldetag: **31.05.2010**

(51) Int Cl.:
***G01N 17/02*** *(2006.01)*

(86) Internationale Anmeldenummer:
**PCT/EP2010/003292**

(87) Internationale Veröffentlichungsnummer:
**WO 2010/145753 (23.12.2010 Gazette 2010/51)**

(54) **VERFAHREN UND VORRICHTUNG ZUR BESTIMMUNG DER LAGE VON KORROSIONSSTELLEN IN BEWEHRTEM BETON**

METHOD AND DEVICE FOR DETERMINING THE LOCATION OF CORROSION SITES IN REINFORCED CONCRETE

PROCÉDÉ ET DISPOSITIF DE DÉTERMINATION DE LA POSITION DE POINTS DE CORROSION DANS DU BÉTON ARMÉ

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **19.06.2009 DE 102009029914**

(43) Veröffentlichungstag der Anmeldung:
**25.04.2012 Patentblatt 2012/17**

(73) Patentinhaber: **Rheinisch-Westfälische Technische Hochschule Aachen (RWTH)**
**52062 Aachen (DE)**

(72) Erfinder:
• **RAUPACH, Michael**
**52078 Aachen (DE)**
• **REICHLING, Kenji**
**52062 Aachen (DE)**

(74) Vertreter: **Cohausz Hannig Borkowski Wißgott Patent- und Rechtsanwaltskanzlei Schumannstrasse 97-99 40237 Düsseldorf (DE)**

(56) Entgegenhaltungen:
**WO-A1-2007/096668 GB-A- 2 157 441 US-A- 4 758 324**

• **GULIKERS J ET AL: "Development of a calculation procedure for the statistical interpretation of the results of potential mapping performed on reinforced concrete structures" MATERIALS AND CORROSION - WERKSTOFFE UND KORROSION, WILEY VCH., WEINHEIM, DE LNKD- DOI:10.1002/MACO.200805089, Bd. 60, Nr. 2, 1. Februar 2009 (2009-02-01), Seiten 87-92, XP001521417 ISSN: 0947-5117**

**Beschreibung**

Die Erfindung betrifft ein Verfahren zur Bestimmung der Lage von Korrosionsstellen in bewehrtem Beton, z.B. Stahl- oder Spannbeton, bei dem auf der Betonoberfläche an wenigstens zwei Messorten ein Wert eines am jeweiligen Messort gegebenen Spannungspotentials relativ zu einem an einem Referenzort gegebenen Referenz-Spannungspotential gemessen wird. Die Erfindung betrifft weiterhin auch eine Vorrichtung zur Bestimmung der Lage von Korrosionsstellen in bewehrtem Beton, insbesondere mit welcher das erfindungsgemäße Verfahren durchgeführt werden kann, die eine Elektrodenanordnung mit mindestens einer Elektrode umfasst, die in elektrolytischen Kontakt bringbar ist mit der Oberfläche eines zu prüfenden bewehrten Betons und die dazu eingerichtet ist, mit der wenigstens einen Elektrode Spannungspotentiale an mehreren Messorten relativ zu einem Referenz-Spannungspotential am Referenzort einer Elektrode zu messen.

Verfahren und Vorrichtungen dieser Art sind z.B. bekannt aus den Veröffentlichungen WO 2007/096668 A1, US 4 758 324 A, GB 2 157 441 A und Gulikers J et. Al: "Development of a calculation procedure for the statistical interpretation of the results of potential mapping on reinforced concrete structure", Materials and Corrosion 2009, 60, No. 2 WILEY VCH Verlag GmbH & Co. KGaA., Weinheim, DE.

Beton wird üblicherweise zur Erhöhung der Tragfähigkeit mit Bewehrung versehen. Dabei handelt es sich typischerweise um Betonstabstähle oder Mattenbewehrung (gitterförmige angeordnete Bewehrungsstäbe), die bei Bauvorhaben mit der Betonmasse umgossen werden.

Dabei ist es bekannt, dass sich in der hochalkalischen Umgebung, die durch den Beton ausgebildet wird, eine dünne Oxidschicht auf den Metallarmierungen ausbildet, die vor einer weiteren Korrosion schützt. Es ist jedoch als Problem bekannt, dass unter äußeren Einflüssen die schützende Oxidschicht zerstört werden kann, beispielsweise durch Chloride, die den Beton bis zu der Bewehrung hin durchdringen oder auch durch eine Karbonatisierung des Betons, wodurch Fehlstellen in der passivierenden Oxidschicht entstehen können und somit lokal ausgebildete Fehlstellen weiter korrodieren können, insbesondere unter dem Einfluss von Sauerstoff und Feuchtigkeit, die normalerweise im Beton vorhanden sind.

Durch eine fortschreitende Korrosion der Armierungen kann demnach eine Stahlbetonkonstruktion seine Tragfähigkeit verlieren und zu einem Sicherheitsrisiko werden. Es ist daher im Stand der Technik bekannt, solche Korrosionsstellen durch messtechnische Maßnahmen ausfindig zu machen, beispielsweise durch das Prinzip der Halbzellenpotentialmessung.

Dieses Prinzip nutzt aus, dass eine als unedel zu bezeichnende Korrosionsstelle zusammen mit den edlen, korrosionsgeschützten Bereichen eines Bewehrungsstabes eine elektrogalvanische Zelle ausbildet, was bedeutet, dass es in der Umgebung einer Korrosionsstelle zur Ausbildung eines Potentialtrichters kommt sowie zum Fließen minimaler Ströme.

Das im Stand der Technik bekannte Verfahren macht sich dies zunutze, nämlich dadurch, dass eine als Halbzelle bezeichnete Elektrode in Kontakt gebracht wird mit der Oberfläche des Betons, wobei über einen Voltmeter ein weiterer Kontakt hergestellt wird zu einer zu untersuchenden Metallarmierung (Bewehrung), wofür es notwendig ist, den Beton lokal aufzubrechen, um Zugang zu der zu untersuchenden Bewehrung zu erhalten. Es besteht sodann die Möglichkeit, die durch die lokale Korrosionsstelle entstandenen Potentiale, die bis zur Oberfläche des Betons dringen, relativ zu einem Bezugspotential in direkter Kontaktierung der Metallarmierung zu messen und aus der Größe des gemessenen Potentials auf die lokale Anordnung einer Korrosionsstelle zu schließen.

Es wird bei diesem Verfahren einerseits als nachteilig empfunden, dass ein gemessenes Potential für sich alleine keine genügende Information bereitstellt, um auf den Ort einer Korrosionsstelle zu schließen und andererseits als besonders nachteilig angesehen, dass zum Erhalt eines Referenzpotentials mechanisch durch zerstörerische Maßnahmen ein Zugang durch den Beton hindurch bis zu einer Metallarmierung geschaffen werden muss. Das Schaffen solcher Zugänge ist kostenintensiv, zeitaufwändig und bedingt des Weiteren im Nachgang zu einer Messung auch das nachträgliche erneute Verschließen des geschaffenen Zugangs. Als weiterer Nachteil wird die Kabelverbindung mit dem Bewehrungsanschluss angesehen, wobei üblicherweise sehr große Kabellängen benötigt werden.

Es ist daher die Aufgabe der Erfindung, ein Verfahren und eine Vorrichtung bereitzustellen, mittels denen aus den Messungen von Potentialen eine genauere Information über die Lage der Korrosionsstelle gewonnen werden kann und bei denen bevorzugt zerstörungsfrei und mit hoher Genauigkeit Korrosionsstellen an den Bewehrungsstäben von bewehrtem Beton aufgefunden werden können. Dabei soll mit dem Verfahren und der Vorrichtung in bevorzugter Ausgestaltung weiterhin die Möglichkeit geschaffen werden, nicht nur punktuell Messungen an Betonoberflächen vorzunehmen, sondern ebenso eine gegebene Betonoberfläche abzuscannen und aus den Informationen eines solchen Scans Hinweise auf Korrosionsstellen im Inneren des Betons zu gewinnen bzw. diese unmittelbar grafisch darzustellen.

Erfindungsgemäß wird diese Aufgabe dadurch gelöst, dass aus den 2D-Koordinaten zu jedem Messort oder zu jedem Messort und dem Referenzort in einer Ebene eines vorgegebenen Koordinatensystems zusammen mit dem Wert des Spannungspotentials am jeweiligen Ort eine 3D-Raumkoordinate gebildet wird, die je einen Punkt im Koordinatensystem bestimmt und aus wenigstens drei der so gebildeten Punkte mathematisch zu einer durch die wenigstens drei Punkte definierten Ebene ein Maß für den Gradienten dieser Ebene oder eine davon abhängende Größe bestimmt wird, woraus die Richtung zu einer Korrosionsstelle und / oder ein Abstand zu einer Korrosionsstelle berechnet wird. Dabei kann es sich auch um eine qualitative Information handeln. Hinsichtlich des Abstandes kann dieser also z.B. in einer Ausführung konkret in einer Maßeinheit berechnet werden oder die Information kann gegeben sein durch die bloße Angabe "weit" oder nah", ggfs. mit mehreren Abstufungen.

Eine solche Bestimmung kann z.B. mathematisch durch Berechnung mit einer Datenverarbeitungsanlage erfolgen, insbesondere unter Berücksichtigung physikalischer Kenntnisse von Potentialen in der Umgebung von Korrosionsstellen und insbesondere von deren räumlicher Anordnung bzw. Ausgestaltung. So kann unter Berücksichtigung physikalischer Grundlagen, bzw. eines physikalischen Modells alleine aus den Informationen über die Höhe der Spannungspotentiale und dem Ort an dem ein jeweiliges Spannungspotential (ggfs. einschließlich Referenz-Spannungspotential) vorherrscht die Information gewonnen werden.

Erfindungsgemäß wird aus den jeweiligen 2D-Koordinaten der Messorte, insbesondere auch des Referenzortes in einer Ebene eines vorgegebenen Koordinatensystems, insbesondere die parallel zur oder in der Betonoberfläche gewählt ist, zusammen mit dem Wert des Potentials am jeweiligen Ort eine 3D-Raumkoordinate gebildet werden, die je einen Punkt im Koordinatensystem bestimmen. Es wird dann aus wenigstens drei Punkten mathematisch eine Information über die Richtung zur Korrosionsstelle und/oder den Abstand zur Korrosionsstelle bestimmt.. Einer der drei Punkte kann hierbei durch die Koordinaten des Referenzortes und dessen Referenz-Spannungspotential gegeben sein, es kann jedoch auch vorgesehen sein, dass alle Punkte durch Messorte und konkret gemessene Spannungspotentiale gebildet werden.

Wesentlich ist es für das erfindungsgemäße Verfahren, dass an mehreren Messorten Spannungspotentiale erfasst werden. Mit der Kenntnis, dass Spannungspotentiale ortsabhängig relativ zur Korrosionsstelle sind, kann demnach die gewünschte Information berechnet werden, beispielsweise dadurch, dass mit den Messwerten und den 2D-Ortskoordinaten zumindest der Messorte ggfs. auch des Referenzortes und dessen zu Null angenommenen bzw. normierten Potentials Punkte im Raum des gewählten Koordinatensystems bestimmt werden.

Diese Punkte liegen auf der Oberfläche eines um eine Korrosionsstelle gegebenen Potentialtrichters und stellen somit eine Information über die Lage und Größe / Höhe des Potentialtrichers im Raum, d.h. dem gewählten Koordinatensystem dar. Informationen über den Potentialtricher und somit die Lage einer Korrosionsstelle lassen sich daher mittels mathematischer Berechnungen aus den wenigstens drei Punkten ermitteln.

Die Messung der Spannungspotentiale an verschiedenen Messorten relativ zu einem Referenzort kann in einer Ausführung z.B. mittels einer einzigen Elektrode erfolgen, die elektrolytisch mit der Oberfläche des Betons in Kontakt gebracht wird. Mittels dieser einen Elektrode kann an mehreren Messorten das Spannungspotential nacheinander relativ zu einer Elektrode an einem Referenzort gemessen werden. Der Referenzort kann dabei sowohl auf der Betonoberfläche sein oder auch durch eine Bewehrung im Inneren des Betons gegeben sein, der partiell aufgebrochen wurde, um Zugang zu Bewehrung zu schaffen. Für jede Messung an jedem Messort sollte bevorzugt der Referenzort beibehalten werden.

In einer anderen Ausführung können auch mehrere Elektroden zum Messen der Spannungspotentiale relativ zu einer Elektrode an einem Referenzort verwendet werden, die elektrolytisch mit der Oberfläche des Betons in Kontakt gebracht werden. Es besteht so die Möglichkeit die Potentialmessung an wenigstens zwei Messorten mittels wenigstens zwei Elektroden vorzunehmen, wobei jedem Messort zum Zeitpunkt der Messung eine dieser Elektroden zugeordnet ist. Der Referenzort kann auch hierbei sowohl auf der Betonoberfläche sein oder auch durch eine Bewehrung im Inneren des Betons gegeben sein, der partiell aufgebrochen wurde, um Zugang zu Bewehrung zu schaffen.

Hier können bevorzugt die wenigstens zwei Elektroden, die die Messorte definieren zueinander in einer Elektrodenanordnung ortsfest angeordnet sein. Die Elektrode im Referenzort kann hierzu getrennt sein oder auch einen Teil der Elektrodenanordnung bilden. In letzterem Fall ist auch die Elektrode im Referenzort ortsfest zu den Elektroden in den Messorten und kontaktiert dabei bevorzugt ebenso elektrolytisch die Betonoberfläche.

Immer dann, wenn eine Elektrode mit der Betonoberfläche im Referenzort kontaktiert wird, erfolgt dies bevorzugt elektrolytisch. An einer Bewehrung lässt sich eine Referenzelektrode beispielsweise auch klemmend befestigen durch direkten Metallkontakt.

Bei dem erfindungsgemäßen Verfahren besteht auch die Möglichkeit, zunächst eine Vielzahl von Potentialmessungen an verschiedenen Messorten, bevorzugt immerzu demselben Referenzort, durchzuführen und für jeden Messort, ggfs auch den Referenzort, die 3D-Koordinate und den entsprechenden Punkt im Raum zu bilden und dann anschließend mittels jeweils wenigstens drei Punkten aus der Schar aller so gebildeter Punkte im Raum eine Information über die Richtung und / oder den Abstand zu einer Korrosionsstelle zu berechnen.

Alternativ können auch nacheinander an Gruppen von wenigstens zwei Messorten die Spannungspotentiale relativ zu einem Referenzort gemessen und die wenigstens drei Punkte in einem zusammenhängenden Messschritt gebildet werden und dann jeweils die Information über Richtung und/oder Abstand berechnet werden, bevor das Verfahren mit der Messung der Spannungspotentiale an einer nächsten Gruppe von wenigstens zwei Messorten fortgeführt wird. Dabei kann sich der Referenzort von Gruppe zu Gruppe ändern oder auch für alle Gruppen beibehalten werden.

Zunächst ist ein Koordinatensystem zu definieren bzw. vorzugeben, um das erfindungsgemäße Verfahren durchzuführen, zumindest dann, wenn eine Überprüfung der Betonoberfläche an mehreren Stellen, insbesondere eine flächige Überprüfung einer Betonoberfläche an mehr als einer Stelle durchgeführt werden soll und die Messwerte an den vielen verschiedenen Messpositionen untereinander in Korrelation gebracht werden sollen.

Hierfür kann beliebig ein Ursprung definiert werden, der beispielsweise auf der Betonoberfläche liegt. Eine 2D-Koordinate eines jeden Messortes bzw. der Elektrode an einem jeden Messort kann demnach relativ zu diesem gebildeten bzw. gewählten Ursprung bestimmt werden, beispielsweise auch durch messtechnische Bestimmung.

Beispielsweise kann so festgestellt werden, dass an einem Messort 1 die Elektrode die 2D-Koordinate $(X1, Y1)$ aufweist, an einem Messort 2 die (selbe oder andere) Elektrode die 2D-Koordinate $(X2, Y2)$ und die Elektrode am Referenzort 3 die Koordinate $(X3, Y3)$, sofern das Verfahren bzw. die Vorrichtung in dieser beispielhaften Betrachtung auf drei zu bestimmende Punkte beschränkt ist, wobei darauf hinzuweisen ist, dass das Verfahren bzw. auch die Vorrichtung zur Durchführung des Verfahrens auch mit mehr als zwei Messorten und einem Referenzort arbeiten kann. Insbesondere kann das Verfahren mit einer beliebigen Anzahl von N Messorten und einem Referenzort durchgeführt werden.

Bei der Messung mit einer Elektrodenanordnung mit ortfesten Elektroden, insbesondere in den Messorten und dem Referenzort, kann z.B. die Konfiguration der Elektroden allgemein so gewählt sein, dass die Elektroden, bzw. deren Auflageorte auf der Betonoberfläche, eine geometrische, insbesondere symmetrische Form beschreiben, also z.B. 3 Elektroden eine Dreieckform, bei der die Elektroden in den Ecken des Dreiecks, insbesondere gleichschenkligen Dreiecks angeordnet sind. 4 Elektroden können eine 4-eckige Form beschreiben, insbesondere eine quadratische oder alternativ auch eine Dreieckform, bei der 3 der 4 Elektroden in den Ecken des Dreiecks angeordnet sind und eine der 4 Elektroden im geometrischen Schwerpunkt des Dreiecks. Eine solche Anordnung mit ortsfesten Elektroden hat den Vorteil, dass, wenn zumindest die 2D-Koordinaten einer dieser Elektroden, insbesondere einer Elektrode an einem Messortes bekannt sind, die 2D-Koordinaten der übrigen Orte (Mess- und/oder Referenzort) bzw. Elektroden unmittelbar hieraus berechnet werden können, da alle Elektroden untereinander eine bekannte ortsfeste Anordnung aufweisen.

Das jeweilige Potential an jeder der betrachteten Elektrode kann durch einen Wert repräsentiert werden, insbesondere nämlich für zwei Elektroden durch je einen Messwert relativ zur Elektrode im Referenzort, wobei es hier vorgesehen sein kann, das Referenzpotential an dieser Elektrode als Null zu definieren.

Bei einer solchen Elektrodenanordnung ist es bevorzugt vorgesehen, dass diese wenigstens drei relativ zueinander ortsfest angeordnete Elektroden aufweist, wobei es gemäß dem Verfahren vorgesehen sein kann, alle Elektroden dieser Elektrodenanordnung in elektrolytischen Kontakt zu bringen mit der Oberfläche eines zu prüfenden bewehrten Betons. Um die ortsfeste Anordnung zu erhalten, können die Elektroden z.B. an einem gemeinsamem Gestell bzw. Elektrodenträger befestigt sein.

Das erfindungsgemäße Verfahren unterscheidet sich in dieser bevorzugten Weiterbildung maßgeblich vom vorbekannten Stand der Technik, nämlich dadurch, dass keine Notwendigkeit besteht, durch Zerstörung des Betons einen direkten Zugang zu einer Bewehrung im Inneren des Betonvolumens zu erhalten. Vielmehr kommt das erfindungsgemäße Verfahren in dieser Ausbildung vollständig damit aus, die Elektroden der Elektrodenanordnung lediglich an der Oberfläche in Kontakt mit dem zu prüfenden bewehrten Beton zu bringen.

Es ist weiterhin vorgesehen, sodann Spannungspotentiale zwischen den Elektroden zu messen, wobei bevorzugterweise eine der Elektroden der Elektrodenanordnung sich im Referenzort befindet, um relativ zu dieser die Spannungspotentiale an den Orten der übrigen Elektroden der Elektrodenanordnung zu messen.

So kann relativ zur Elektrode im Referenzort, insbesondere an der beispielsweise das Potential rechentechnisch zu Null definiert werden kann, das jeweilige Potential an den übrigen, wenigstens zwei weiteren Elektroden der Elektrodenanordnung in den Messorten gemessen werden, d.h. insbesondere erfasst und bevorzugt auch gespeichert werden, zumindest für die Dauer der weiteren folgenden Verarbeitung.

Unabhängig, ob die Potentialmessungen mit einer Anordnung aus mehreren, insbesondere zueinander ortsfesten Elektroden oder nacheinander mit nur einer Elektrode an mehreren Messorten durchgeführt werden, werden erfindungsgemäß zusammen mit den 2D-Koordinaten einer Elektrode an jedem Messort, ggfs. auch am Referenzort demnach 3D-Raumkoordinaten gebildet, indem nämlich angenommen wird, dass sich die 2D-Koordinaten in einer Ebene des gewählten Koordinatensystems, insbesondere in der Ebene der Betonoberfläche oder parallel dazu befinden. Diese Ebene kann als eine X-Y-Ebene definiert sein, wobei sodann der Wert eines Potentials eine Z-Koordinate bilden kann. Die Koordinatenbezeichnungen können beliebig vertauscht werden, ohne den wesentlichen Gedanken der Erfindung zu ändern.

Es ergeben sich demnach mit dem erfindungsgemäßen Verfahren eine Anzahl von mindestens drei 3D-Raumkoordinaten (an mindestens zwei Mess- und einem Referenzort), die in Bezug auf das vorgenannte Beispiel die Koordinate $(X1, Y1, U1)$, die weitere Koordinate $(X2, Y2, U2)$ sowie die dritte 3D-Raumkoordinate $(X3, Y3, 0)$ aufweisen. Hierbei stellen die Werte U1 und U2 die Messwerte des Spannungspotentials an den Messorten 1 und 2 relativ zum Referenzort dar, an welchem das Potential zu Null angenommen bzw. als Null definiert wird. Durch jede der drei 3D-Raumkoordinaten wird die Position eines Punktes im Raum des gewählten Koordinatensystems beschrieben. Dabei ist es unerheblich, ob es sich um ein Koordinantensystem mit kartesischen oder polaren Koordinaten oder Koordinaten einer anderen Definition handelt.

Bei einer entsprechend höheren Anzahl von Elektroden gilt die vorgenannte Betrachtung in analoger Weise mit einer entsprechend höheren Anzahl von Punkten im gewählten Koordinatensystem.

Mit den durch das erfindungsgemäße Verfahren gebildeten wenigstens drei Punkten, die auf einem Potentialtrichter einer Korrosionsstelle liegen, kann nun erfindungsgemäß der Abstand und/oder die Richtung bestimmt werden zur Korrosionsstelle.

Dies kann durch grundsätzlich beliebige mathematische Vorgehensweisen erfolgen, mittels denen aus der geometrischen Lage der Punkte im Raum auf die Form und/oder Lage und/oder Höhe des Potentialtrichers geschlossen werden. Z.B. kann dies durch rein trigonometrische oder auch vektorielle Berechnungen erfolgen.

Erfindungsgemäß wird zu einer durch die wenigstens drei Punkte definierten Ebene ein Maß für den Gradienten dieser Ebene oder eine davon abhängende Größe bestimmt, wobei die Richtung zu einer Korrosionsstelle und / oder ein Abstand zu einer Korrosionsstelle sodann aus diesem Maß oder der Größe berechnet wird. Der Gradient ist dabei vom Betrag her umso größer, je geringer der Abstand zur Korrosionsstelle ist. Die vektorielle Richtung des Gradienten weist dabei zur Korrosionsstelle.

In einem Beispiel kann der Abstand und/oder die Richtung bestimmt werden aus der mathematischen Projektion des normierten Normalenvektors der Ebene (durch die wenigstens drei Punkte) in eine Ebene des Koordinatensystems, die in oder parallel zur Betonoberfläche liegt, wobei die Richtung durch die Erstreckung des projizierten Normalenvektors repräsentiert wird und der Abstand durch dessen Länge.

Beispielsweise handelt es sich um die Projektion in die X-Y-Ebene des Koordinatensystems oder eine dazu parallele Ebene. Unter der Richtung wird dabei ein Winkel verstanden relativ zu einer der Koordinatenachsen X bzw. Y des Koordinatensystems. Der Ort im Koordinatensystem, für den der Abstand zur Korrosionsstelle bestimmt wird ist dabei im Wesentlichen der Ort, an dem der Normalenvektor rechnerisch auf der Ebene positioniert wird.

Zur Durchführung des genannten Verfahrensschrittes kann es vorgesehen sein, dass eine mathematische Ebene rechnerisch aufgespannt wird, welche die durch die Raumkoordinaten bestimmten Punkte umfasst. Hierzu kann z.B. mittels einer Datenverarbeitungsanlage eine mathematische Repräsentation der Ebene berechnet werden anhand der wenigstens drei Punkte bzw. von deren 3D-Raumkoordinaten.

Dem Verfahrensschritt der Bildung einer solchen mathematischen Ebene liegt die Überlegung zugrunde, dass so, wie es eingangs erläutert wurde, sich um eine Korrosionsstelle (idealisiert betrachtet) ein Potentialtrichter ausbildet. Durch Messung bzw. Bestimmung der Potentiale an wenigstens drei Orten in der Umgebung einer solchen Korrosionsstelle werden drei Punkte auf einem solchen Potentialtrichter bestimmt, wobei hier jedoch lediglich zur Vereinfachung die ideale Potentialtrichterform angenommen wird, in der Praxis jedoch aufgrund Abweichungen von den idealen Bedingungen sich nicht trichterförmige Potentiale ergeben. Dabei können in einer Weiterbildung bei der Berechnung auch nichtideal-trichterförmige Potentiale berücksichtigt werden.

Eine gebildete Ebene durch die wenigstens drei Messpunkte schneidet demnach die Potentialfläche bzw. Potentialtrichter in der Umgebung einer Korrosionsstelle und würde, wenn man die Orte der wenigstens drei Elektroden idealisiert infinitesimal aneinander legen würde, tangential an der Potentialfläche anliegen.

Im Rahmen einer Messgenauigkeit, die durch die tatsächliche räumliche Beabstandung der Messorte bzw. der zur Messung verwendeten Elektroden gegeben wird, stellt demnach eine solche Ebene zwischen den wenigstens drei bestimmten Punkten genähert einen Flächenabschnitt der Potentialfläche dar.

Ist die mathematische Ebene derart bestimmt, so kann es gemäß dem Verfahren weiterhin vorgesehen sein, zu dieser Ebene den normierten Normalenvektor rechnerisch zu bestimmen, der senkrecht mit der normierten Länge 1 auf dieser Ebene steht, von dieser entspringt und in Richtung von der Ebene, insbesondere in Richtung zum Inneren des Potentialtrichters wegweist. Es kann sodann weiterhin vorgesehen sein, den rechnerisch bestimmten normierten Normalenvektor mathematisch in die X-Y-Ebene des Koordinatensystems, insbesondere in die Ebene der Betonoberfläche oder eine Ebene parallel zu dieser zu projizieren und von dem so projizierten Normalenvektor die Länge und die Richtung zu bestimmen.

Es ergeben sich hierdurch zwei mit dem Verfahren bestimmte Werte, die zur Lokalisierung einer Korrosionsstelle beitragen, nämlich derart, dass die Richtung, die der Normalenvektor in der Projektion aufweist, in die Richtung einer Korrosionsstelle weist und die Länge in der Projektion ein Maß ist für den Abstand der Elektrodenanordnung zur Korrosionsstelle. Die Länge des projizierten normierten Normalenvektors ist ein Maß für den Betrag des Gradienten der Ebene.

Dem wiederum liegt idealisiert die Überlegung zugrunde, dass bei einem ideal angenommenen Potentialtrichter jeder Normalenvektor, der auf der inneren Trichteroberfläche steht, in der Projektion auf eine Ebene parallel zur Betonoberfläche bzw. die X-Y-Ebene exakt in die Trichtermitte und damit zur Korrosionsstelle zeigt. Dabei hat die Projektion die größte Länge, nämlich die Länge 1 für den normierten Normalenvektor an der Stelle des Trichters, wo die angenommene ideale Trichterwandung senkrecht zur X-Y-Ebene steht. In Richtung nach außen hingegen nimmt die Steilheit der Trichterwandung ab, d.h. die Projektion des Normalenvektors ist kleiner als 1 und wird mit zunehmendem Abstand kleiner.

Das hier beschriebene Verfahren kann durchgeführt werden mit einer Vorrichtung, die eine Elektrodenanordnung mit mindestens einer Elektrode an einem Messort umfasst, die in elektrolytischen Kontakt bringbar ist mit der Oberfläche eines zu prüfenden bewehrten Betons, wobei die Vorrichtung dazu eingerichtet ist, mit der wenigstens einen Elektrode Spannungspotentiale an mehreren Messorten relativ zu einem Referenzpotential an einem Referenzort zu messen und die weiterhin eingerichtet ist, relativ zum Ursprung eines vorgegebenen Koordinatensystems zu jedem Messort oder jedem Messort und Referenzort aus dessen 2D-Koordinate in einer Ebene in oder parallel zur Betonoberfläche zusammen mit einem das jeweilige Potential an diesem Ort repräsentierenden Wert eine 3D-Raumkoordinate zu bilden, die jeweils einen Punkt in Raum des Koordinatensystems definiert und, insbesondere durch Ablauf einer Software in einem Datenverarbeitungsteil der Vorrichtung, aus wenigstens drei so ermittelten Punkten mathematisch zu einer durch die wenigstens drei Punkte definierten Ebene ein Maß für den Gradienten dieser Ebene oder eine davon abhängende Größe zu bestimmen und daraus die Richtung zu einer Korrosionsstelle und / oder einen Abstand zu einer Korrosionsstelle zu berechnen. Mit einer einzelnen Elektrode in der Elektrodenanordnung kann sodann auch an mehreren Messorten das Spannungspotential relativ zu einer Elektrode am Referenzort gemessen werden.

Zur Vereinfachung der Messung kann es jedoch in einer bevorzugten Weiterbildung vorgesehen sein, dass die Elektrodenanordnung mindestens zwei relativ zueinander ortsfest angeordnete Elektroden umfasst, die in elektrolytischen Kontakt bringbar sind mit der Oberfläche eines zu prüfenden bewehrten Betons. Eine Elektrode am Referenzort kann zu dieser Anordnung getrennt sein.

Sie kann aber auch in einer weiterhin bevorzugten Elektrodenanordnung einen Teil dieser Elektrodenanordnung ausbilden. Dann hat eine erfindungsgemäße Elektrodenanordnung wenigstens drei Elektroden, von denen wenigstens zwei die Elektroden im Messort und eine die Elektrode im Referenzort bilden.

Die Bestimmung von Abstand und Richtung zur Korrosionsstelle kann dabei durch die Vorrichtung bzw. eine darin vorgesehene Datenverarbeitungsanlage erfolgen, wie es zuvor beschrieben wurde.

Dabei ist festzuhalten, dass es im Sinne der Erfindung für Verfahren und Vorrichtung bei der einen genannten Ausführung unter Benutzung einer Projektion eines normierten Normalenvektors nicht durch einzelne rechentechnische Schritte notwendig ist, nach Erhalt der wenigstens drei Punkte zuerst eine mathematische Repräsentation der Ebene durch diese Punkte zu berechnen, ausgehend davon, den Normalenvektor in einer mathematischen Repräsentation zu berechnen, durch weitere mathematische Repräsentation die Projektion vorzunehmen und dann hieran die Richtung und/oder Länge zu bestimmen.

Vielmehr kann es auch vorgesehen sein, durch einen einzigen mathematischen Rechenschritt bzw. Anwendung eines Rechenalgorithmus auf die wenigstens drei Punkte unmittelbar diejenigen Werte zu berechnen, die der Länge und/oder der Richtung des projizierten normierten Normalenvektors entsprechen. Die Durchführung eines solchen Rechenschrittes, beispielsweise durch einen formularmäßigen Zusammenhang entspricht jedoch inhaltlich der Durchführung der vorgenannten Schritte, ohne dass für jeden dieser Schritte eine Zwischenrepräsentation durch mathematische Werte gegeben sein muss.

Diese Betrachtung gilt im Übrigen weiterhin auch für nachfolgende Verfahrensschritte mathematischer Art, die nicht zwingend diskret durchgeführt werden müssen, jedoch in einem formularmäßigen Zusammenhang bei der Berechnung von Richtung und Länge des Normalenvektors berücksichtigt sind. Im Übrigen kann auch mit der Vorrichtung eine Information über die Richtung zur Korrosionsstelle und / oder den Abstand zu dieser auch mit anderen mathematischen Berechnungen ermittelt werden.

In einer Weiterbildung des Verfahrens, welches sich die Projektion des Normalenvektors zunutze macht, kann es vorgesehen sein, dass der Normalenvektor zum Zweck der Projektion in einen Bereich der bestimmten Ebene gelegt wird, der durch einen Polygonzug umgrenzt wird, dessen Eckpunkte durch die wenigstens drei Punkte bzw. deren 3D-Raumkoordinaten gegeben ist.

Diesem Verfahrensschritt liegt die Überlegung zugrunde, dass ein Normalenvektor grundsätzlich an einem beliebigen Ort senkrecht zu einer im Raum unendlich ausgedehnten mathematischen Ebene positioniert werden kann. Für das vorliegende Verfahren erfolgt die Positionierung in einem räumlich umgrenzten Gebiet zwischen den Punkten, die durch die eingangs genannten wenigstens drei 3D-Raumkoordinaten bestimmt sind. Andernfalls wäre keine genügende Genauigkeit in der Richtungsweisung durch den Normalenvektor gegeben, vielmehr hätte dieser außerhalb des genannten Bereichs der Ebene einen zu großen Parallelversatz zur Korrosionsstelle.

In besonders bevorzugter Ausführung kann es vorgesehen sein, dass der Normalenvektor für die Projektion in den geometrischen Schwerpunkt der 3D-Raumkoordinaten gelegt wird.

Für das erfindungsgemäße Verfahren bzw. beim Einsatz mit einer erfindungsgemäßen Vorrichtung ist es notwendig, die 2D-Raumkoordinaten der Messorte bzw. wenigstens einer der Elektroden der Elektrodenanordnung relativ zu einem vorgegebenen Koordinatensystem zu kennen, um nämlich insgesamt die wenigstens drei Raumkoordinaten ausbilden zu können.

Dabei kann in einer Annahme das Koordinatensystem seinen Ursprung am Ort einer der Elektroden einer Elektrodenanordnung haben, wobei sodann durch die feste relative Zueinanderanordnung der Elektroden die Koordinaten aller Elektroden in der X-Y-Ebene, bzw. der Ebene der Betonoberfläche, d.h. als 2D-Koordinaten bekannt sind. Eine solche Bestimmung der 2D-Koordinaten kann bereits ausreichend sein, wenn mit dem erfindungsgemäßen Verfahren lediglich an einem Messort das Verfahren durchgeführt werden soll, um so Richtung und Abstand zu einer Korrosionsstelle an diesem Messort zu bestimmen.

In einer weiterhin bevorzugten Ausführung des Verfahrens wird es jedoch als vorteilhaft angesehen, wenn die Elektrodenanordnung mit wenigstens zwei, bevorzugt drei zueinander ortsfesten Elektroden über die Oberfläche eines zu untersuchenden Betons verfahrbar ist und verfahren wird und an mehreren Stellen der Oberfläche Messungen gemäß dem erfindungsgemäßen Verfahren durchgeführt werden. Bei einer Variante, bei welcher drei ortsfeste Elektroden vorgesehen sind, kann sich eine der Elektroden am Referenzort befinden und zwei an den Messorten. Bei einem Bewegen der Elektrodenanordnung wird dann die Elektrode am Referenzort in diesem Fall immer mitbewegt.

Es wird als bevorzugt angesehen, wenn die 2D-Koordinaten der Elektroden in der X-Y-Ebene bzw. der Ebene des Betons relativ zu einem äußeren Koordinatensystem bestimmt werden, in welchem sich die Elektrodenanordnung frei bewegen kann.

Beispielsweise kann es für eine freie Bewegung und einwandfreie Kontaktierung der Elektroden mit der Betonoberfläche vorgesehen sein, dass die Elektroden als Radelektroden ausgebildet sind, die demnach radförmige bzw. rollenförmige Elektroden aufweisen, mit denen der Beton selbst bei einer Verschiebung der Elektrodenanordnung insbesondere kontinuierlich kontaktiert wird. Die Elektroden können dabei unabhängig von der Art der Ausbildung eine feuchte Oberfläche aufweisen und eine optimale Kontaktierung zu schaffen.

Es kann dabei vorgesehen sein, die 2D-Koordinate wenigstens einer dieser Elektroden der Elektrodenanordnung relativ zum vorgegebenen äußeren Koordinatensystem zu ermitteln z.B. durch eine Messung der Bewegungsweite der Elektroden mittels eines Bewegungssensors an dieser Elektrode oder auch mittels eines, insbesondere äußeren Navigationssystems.

Mittels eines solchen Navigationssystems können z.B. Elektroden bzw. wenigstens eine Elektrode mittels wenigstens einer Kamera relativ zu ortfesten Bezugspunkten beobachtet werden, um sodann aus der Position im Kamerabild auf die Position im gewählten Koordinatensystem zu schließen.

Nach der Definition eines Ursprungs, z.B. durch erstmaliges Aufsetzen der Elektrodenanordnung auf die Oberfläche eines zu untersuchenden Betons kann auch durch Messung der Bewegungsweite mittels eines zuvor genannten Bewegungssensors festgestellt werden, wie weit die Elektrodenanordnung ausgehend von diesem Ursprung bewegt wurde, insbesondere in eine bestimmte Richtung.

Es besteht hier ebenso die Möglichkeit, nicht nur die Bewegungsweite in eine bestimmte Richtung, sondern allgemein eine Bewegungsweite und eine Bewegungsrichtung beliebig innerhalb einer Ebene, d.h. hier z.B. entlang der Oberfläche eines zu untersuchenden Betons und somit in der x-Y-Ebene zu vermessen und die Koordinaten der Elektroden aus den Messwerten zu bestimmen, nämlich beispielsweise dadurch, dass die Bewegungsweiten mit wenigstens zwei beabstandeten, insbesondere an zwei Elektroden angeordneten Bewegungssensoren, beispielsweise Radsensoren, bestimmt wird. So ergibt sich z.B. eine Differenz in der Bewegungsweite zwischen zwei Elektroden, wenn die gesamte Anordnung nicht gradlinig, sondern beispielsweise entlang einer kurvenförmigen Trajektorie bewegt wurde.

Durch eine Datenverarbeitungsanlage, welche die Bewegungsweiten von wenigstens einem, bevorzugt mehreren Bewegungssensoren registriert, kann demnach ausgehend von dem ursprünglich festgelegten Koordinatenursprung zum Zeitpunkt einer Messung nach dem eingangs bestimmten Verfahren die Koordinate des Messortes bzw. der wenigstens drei bei der Messung beteiligten Elektroden bestimmt werden.

Dabei reicht, wie eingangs erwähnt, die Bestimmung der Koordinate von einer der Elektroden, da die übrigen Elektroden aufgrund der festen Relativanordnung zueinander sich unmittelbar hieraus ermitteln lassen. Dies gilt für die beschriebene Bestimmung der Bewegungsweite mittels eines Sensors ebenso wie für den Einsatz mit einem externen Navigationsystem.

Mit dem erfindungsgemäßen Verfahren besteht die Möglichkeit, die Elektrodenanordnung entlang einer vorgegebenen Trajektorie über die Oberfläche eines Betons zu bewegen oder aber auch während einer Bewegung der Elektrodenanordnung über die Oberfläche des Betons die Trajektorie zu registrieren und entlang der Trajektorie mehrfach, insbesondere kontinuierlich oder in diskreten Abständen die Richtung und/oder den Abstand zu einer Korrosionsstelle zu bestimmen, z.B. durch die Richtung und /oder Länge des mathematisch projizierten Normalenvektors am Ort der Messung.

Es ergibt sich demnach auf der Oberfläche eines Betons eine Vielzahl von Messwerten für die eingangs genannte Richtung und/oder den Abstand bzw. in der bevorzugten Ausführung für die Richtung und/oder Länge des projizierten Normalenvektors, so dass sich demnach auch zu einer Vielzahl von Orten auf der Oberfläche des Betons Informationen ergeben, in welcher Richtung und wie weit entfernt von der jeweiligen Messposition eine potentielle Korrosionsstelle liegt.

Bevorzugt kann es hier vorgesehen sein, für jeden Ort der Bestimmung von Richtung und/oder Abstand bzw. Richtung und/oder Länge des projizierten Normalenvektors die ermittelten Werte insbesondere zusammen mit den Ortskoordinaten zu speichern.

So ergibt sich hieraus die bevorzugte Möglichkeit, aus den gespeicherten Werten (Richtung und/oder Abstand bzw. Länge in Abhängigkeit der Messort-Koordinate) eine Kartendarstellung zu generieren und zur Anzeige zu bringen, beispielsweise auf einem Display oder auch als ein Ausdruck, in welcher für jeden Ort der Bestimmung des projizierten Normalenvektors in der kartenförmigen Darstellung die Länge und/oder Richtung des projizierten normalen Vektors, z.B. als Pfeil dargestellt ist.

Es ergibt sich demnach eine grafische Repräsentation der Betonoberfläche mit den jeweiligen Messpositionen, wobei an jeder Messposition demnach in der Kartendarstellung ein Pfeil oder auch nur eine Linie dargestellt ist, der in eine bestimmte Richtung weist und eine bestimmte Länge aufweist. Durch die Richtung des Pfeils / der Linie wird die Richtung zur potentiellen Korrosionsstelle angezeigt, wobei die Länge, wie eingangs genannt, den Abstand zur Korrosionsstelle definiert, in dem Sinne, dass je länger der Pfeil / die Linie ist, umso näher sich die Korrosionsstelle am Ort der Messung befindet.

Es kann darüber hinaus auch vorgesehen sein, dass am Ort der Bestimmung von Abstand und/oder Richtung bzw. der Länge und/oder der Richtung eines mathematisch projizierten Normalenvektors einem Benutzer der Elektrodenanordnung eine grafische Repräsentation von Abstand/Länge und/oder Richtung angezeigt wird, insbesondere als Pfeildarstellung. Hierfür kann es vorgesehen sein, dass eine Vorrichtung zur Durchführung des Verfahrens eine Anzeigeeinheit aufweist, beispielsweise ein Display, welches einen Pfeil oder eine Linie in einer bestimmten Richtung und/oder in einer bestimmten Länge zeigt.

Ebenso besteht hier die Möglichkeit, eine tatsächliche optische Projektion eines Pfeils mit einer bestimmten Richtung und einer bestimmten Länge korrespondierend zu den Werten von Abstand/Länge und Richtung vorzunehmen.

Ein Ausführungsbeispiel der Erfindung ist schematisch in den folgenden Figuren dargestellt. Es zeigen:

| | |
|---|---|
| Figur 1 | die Anordnung der Messpunkte von Elektroden A, B und C in der XY-Ebene eines gewählten Koordinatensystems |
| Figur 2 | die idealisierte Darstellung des Potentialverlaufs an einer Korrosionsstelle eines Bewehrungsstabes und die Repräsentation der Potentialmesswerte |
| Figur 3 | eine grafische Repräsentation der Werte von Richtung und Länge der Projektion des Normalenvektors für eine Vielzahl von Messpositionen |
| Figur 4 | die Projektion des Normalenvektors |

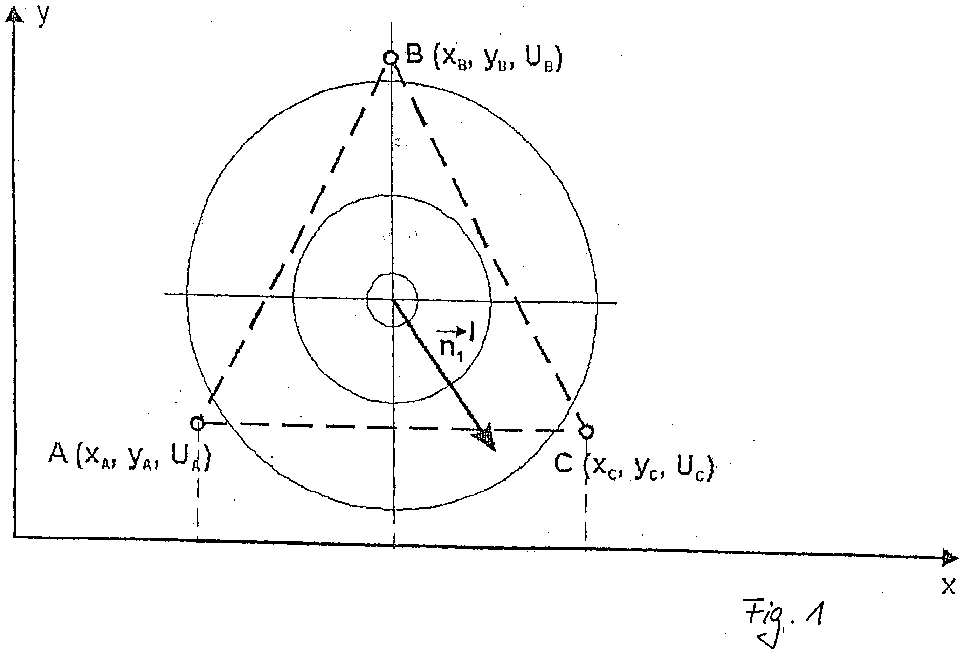

Die Figur 1 zeigt in schematischer Aufsicht eine Elektrodenanordnung einer Vorrichtung zur Durchführung des erfindungsgemäßen Verfahrens. In dieser schematischen Darstellung weist die Elektrodenanordnung drei Elektroden A, B und C auf, die auf die Oberfläche eines armierten Betons aufgelegt sind und diesen kontaktieren, wobei ein Bezugskoordinatensystem derart gewählt ist, dass die X-Y-Ebene dieses Koordinatensystems mit der Oberfläche des Betons zusammenfällt bzw. parallel zu dieser ist.

Somit hat jede der drei Elektroden A, B und C 2D-Ortskoordinaten in der XY-Ebene des Koordinatensystems, nämlich die Elektrode A, die Koordinate $(X_A, Y_A)$, die Elektrode B die Koordinate $(X_B, Y_B)$ und die Elektrode C die Koordinate $(X_C, Y_C)$. Das gewählte Koordinatensystem kann seinen Ursprung, wie eingangs erwähnt, in einer vereinfachten Ausführung am Ort einer der Elektroden haben, ebenso kann es vorgesehen sein, den Ursprung außerhalb der Elektrodenanordnung anzuordnen, insbesondere dann, wenn mehrere Messungen mit der Elektrodenanordnung an verschiedenen Positionen innerhalb des Koordinatensystems und somit der Oberfläche des Betons durchgeführt werden sollen.

Hier ist es vorgesehen, eine Elektrodenanordnung mit drei Elektroden zu verwenden. Es handelt sich dabei um die Mindestanzahl der benötigten Elektroden, es kann demnach auch vorgesehen sein, Elektrodenanordnungen mit mehr als drei Elektroden zu verwenden. Für solche Anordnungen gelten die hier gemachten Angaben analog. Dabei ist es wesentlich, dass alle Elektroden der Elektrodenanordnung einen festen relativen Abstand zueinander aufweisen und dass eine Elektrode der Elektrodenanordnung sich am Referenzort befindet bzw. diesen definiert, so dass das Potential an den übrigen Elektroden der Elektrodenanordnung relativ zu der Elektrode im Referenzort gemessen wird.

Als Beispiel sei hier angenommen, dass die Elektrode A eine Elektrode im Referenzort bildet und demnach die Potentiale an den Orten der Elektroden B und C relativ zum Potential an der Elektrode A gemessen wird. Grundsätzlich ist es jedoch unerheblich, welche der mindestens drei vorhandenen Elektroden sich im Referenzort befinden. Hier sind die Elektroden so angeordnet, dass deren Auflagepunkte auf dem Beton ein Dreieck beschreiben.

Für die Durchführung des Verfahrens kann demnach angenommen werden, dass das Potential am Ort der Elektrode A stabil ist, so dass die relative Messung am Ort der jeweiligen anderen Elektroden der Elektroden B und C möglich ist. Statt mit einer Elektrodenanordnung mit drei ortsfesten Elektroden gemäß Figur 1 kann das Verfahren auch genauso durchgeführt werden mit einer Elektrode und wenigstens zwei Potentialmessungen mit dieser einen Elektrode relativ zu einem Referenzpotenzial oder mit anderen Elektrodenkonfigurationen. Wesentlich ist, dass für wenigstens drei Orte Potentialwerte erhalten werden.

Die Messwerte der Potentiale $U_B$ am Ort der Elektrode B und $U_C$ am Ort der Elektrode C gemessen gegen die Elektrode am Ort A können nunmehr weiterhin verwendet werden, um zusammen mit den Ortskoordinaten in der XY-Ebene einer jeden der Elektroden A, B und C Raumkoordinaten zu bilden, nämlich die Raumkoordinaten für einen Punkt A mit der Position (XA, YA, UA = Null), einen Punkt B mit der Position (XB, YB, UB) und einen Punkt C mit der Position (XC, YC, UC) im gewählten Koordinatensystem.

In einem Koordinatensystem, in welchem senkrecht zur gewählten XY-Ebene das gemessene Potential, also beispielsweise in Z-Richtung aufgetragen wird, bilden die so festgelegten Punkte A, B und C eine räumliche Anordnung zueinander, die eine mathematische Ebene E definieren, d.h. diese drei Punkte oder bei mehreren Elektroden auch mehrere Punkte, liegen innerhalb dieser Ebene E.

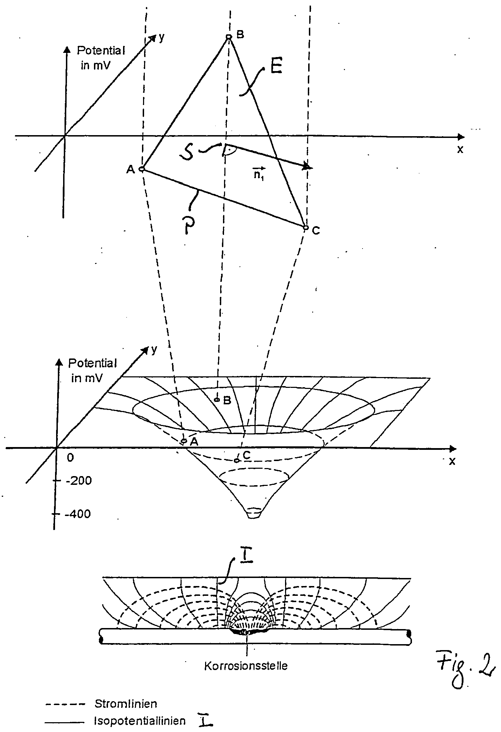

In der Figur 2 ist in der oberen Darstellung die Anordnung der Punkte A, B und C in dem gewählten Koordinatensystem dargestellt, wobei durch Bezugnahme der unteren Darstellung verdeutlicht ist, dass die Punkte A, B und C hinsichtlich ihrer Z-Koordinate die Werte des Potentials am Ort der XY-Koordinate darstellen. Hier ist in der schematischen Darstellung ein ideales trichterförmiges Potential an einer Korrosionsstelle K schematisch dargestellt.

Mit dem erfindungsgemäßen Verfahren kann nun die Länge und/oder die Richtung bestimmt werden von der mathematischen Projektion des normierten Normalenvektors n1 auf dieser so bestimmten mathematischen Ebene, wobei die Projektion mathematisch erfolgt in die XY-Ebene des gewählten Koordinatensystems oder eine dazu parallele Ebene. In der Figur 2 oben ist mit Bezug auf die dreieckig umschlossene Fläche ABC ein Normalenvektor n1 symbolisch dargestellt, der senkrecht auf der gebildeten Ebene E steht und seinen Ausgangspunkt in der hier gewählten Darstellung im geometrischen Schwerpunkt zwischen den Punkten A, B und C im Raum aufweist, d.h. im geometrischen Schwerpunkt S des Polygonzuges P, der die Punkte A, B und C einschließt und im hier vorliegenden Fall demnach dreiecksförmig ist.

Die Figur 1 zeigt, da sie die Aufsicht auf die XY-Ebene darstellt, die Projektion n1' des Normalenvektors. Dabei ergibt, wie eingangs dargelegt, die Richtung des Normalenvektors, d.h. der Winkel relativ zu einer Achse des Koordinatensystems, hier beispielsweise der Y- oder auch der X-Achse des Koordinatensystems, eine Information darüber, wo die Korrosionsstelle relativ zum Messort lokalisiert ist.

Als Messort kann hier beispielsweise wiederum der geometrische Schwerpunkt in der XY-Ebene zwischen den Punkten A, B und C angesehen werden. Die Länge des projizierten Normalenvektors ist dabei ein Maß für den Abstand. Je länger der Normalenvektor ist, umso geringer ist der Abstand zur Korrosionsstelle, da sich der Normalenvektor mit Bezug auf den Potentialverlauf in der mittleren Darstellung der Figur 2 immer mehr in die XY-Ebene hineinneigt und so die Projektion des normierten Normalenvektors exakt den Ort der Korrosionsstelle bestimmt.

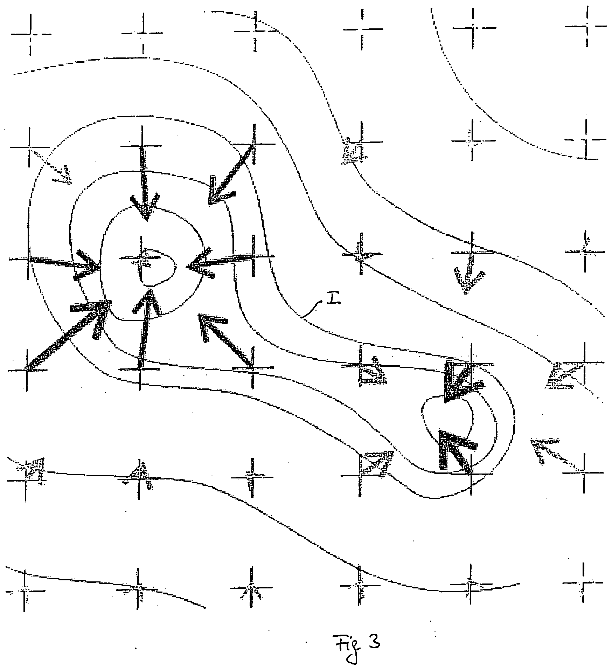

Die Figur 3 zeigt in einer übersichtlichen Darstellung die Repräsentation einer Kartendarstellung, in welcher für verschiedene Messpunkte, die jeweils durch ein Kreuz symbolisiert sind, die Länge und die Richtung des projizierten Vektors eingezeichnet ist. Jedes Kreuz stellt einen Messpunkt dar in der XY-Ebene des gewählten Koordinatensystems und somit in der Oberfläche des Betons.

Hier kann der Messpunkt gegeben sein durch den Schwerpunkt zwischen den Elektroden A, B und C oder aber auch durch den Ort einer der Elektroden, beispielsweise der Elektrode im Referenzort. Insgesamt kann der Messpunkt irgendein Punkt innerhalb der Polygonfläche sein, die in der XY-Ebene die Orte der Elektroden A, B, C umspannt, wie es in der Figur 1 durch die gestrichelte dreiecksförmige Flächengestalt dargestellt ist.

Es zeigt sich demnach in der Figur 3 eine Kartendarstellung, die hier eine Vielzahl von Pfeilen aufweist, wobei ersichtlich mehrere Pfeile mit ihren Spitzen in die Richtung einer Korrosionsstelle weisen. Dabei kann es vorgesehen sein, in der Kartendarstellung ebenso Isopotentiallinien I darzustellen, insbesondere die aus den Messwerten der Potentiale hergeleitet werden können.

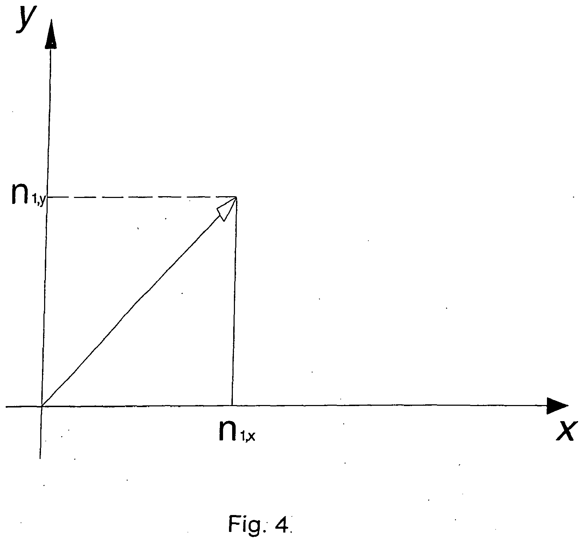

Die Figur 4 sowie die dem Beschreibungstext angehängten Formeln verbildlichen in einem möglichen Beispiel das mathematische Vorgehen bei der Durchführung des erfindungsgemäßen Verfahrens mit einer erfindungsgemäßen Vorrichtung. Erkennbar ist hier, dass mit den Raumkoordinaten XA, YA, UA sowie XB, YB, UB und XC, YC, UC, die aus den jeweiligen 2D-Koordinaten der Elektroden A, B, C sowie den dortigen Potentialen gebildet sind, beispielsweise in der Punktrichtungsform eine mathematische Ebene beschrieben werden kann.

Die weiteren Berechnungen zeigen die Ermittlung des Normalenvektors in seinen Komponenten NX, NY und NZ durch Umstellung der Repräsentation der Ebene in der Punktrichtungsform und einer Annahme, dass die Komponente des normalen Vektors NY = 1 gesetzt wird, um das Gleichungssystem zu lösen. Es lässt sich so der normierte Normalenvektor bestimmen und mit diesem die Projektionslänge in der XY-Richtung und als Beispiel der Winkel Alpha relativ zur Y-Achse des gewählten Koordinatensystems in der XY-Ebene.

Es ergibt sich so die Länge und die Richtung des projizierten Normalenvektors, wobei die erhaltenen Werte neben der zuvor beschriebenen Kartendarstellung auch im Einzelfall an jedem Messort verwendet werden können, um eine tatsächliche grafische Repräsentation der Messwerte vorzunehmen, z.B. durch eine Anzeigeeinheit oder eine tatsächliche optische Projektion eines Pfeils oder einer Linie mit der bestimmten Länge und der bestimmten Richtung, d.h. im Winkel zu einer gewählten Achse des Koordinatensystems.

Mit der Erfindung können demnach auf einfache Weise Betonoberflächen untersucht werden und bevorzugt Korrosionsstellen der Bewehrung in der Tiefe des Betons grafisch visualisiert werden.

**DELTASONDE**

**BERECHNUNG DES NORMALENVEKTORS**

Punkt-Richtungsform:

$$\vec{x} = \begin{pmatrix} XA \\ YA \\ UA \end{pmatrix} + t \cdot \begin{pmatrix} XB - XA \\ YB - YA \\ UB - UA \end{pmatrix} + S \cdot \begin{pmatrix} XC - XA \\ YC - YA \\ UC - UA \end{pmatrix}$$

Berechnung des Normalenvektors:

$$\underline{t} : (XB - XA) \cdot nx + (YB - YA) \cdot ny + (UB - UA) \cdot nz = 0$$

$$\Rightarrow nx = -\frac{(YB - YA) \cdot ny}{XB - XA} - \frac{(UB - UA)}{XB - XA} \cdot nz$$

$$\underline{s} : (XC - XA) \cdot nx + (YC - YA) \cdot ny + (Uc - UA) \cdot nz = 0$$

mit $n_x$ aus $t$ in $s$:

$$-(XC - XA) \cdot \left[ \frac{YB - YA}{XB - XA} \cdot ny + \frac{UB - UA}{XB - XA} \cdot nz \right]$$

$$+ (YC - YA) \cdot ny + (UC - UA) \cdot nz = 0$$

$$\Leftrightarrow nz \cdot \left[ -\frac{(XC - XA) \cdot (UB - UA)}{(XB - XA)} + (UC - UA) \right]$$

$$+ ny \cdot \left[ -\frac{(YB - YA) \cdot (XC - XA)}{(XB - XA)} + (YC - YA) \right] = 0$$

EP 2 443 433 B1

$$\Leftrightarrow nz = \frac{\left[\frac{(YB-YA)\cdot(XC-XA)}{(X_B-X_A)} - (YC-YA)\right]}{\left[-\frac{(XC-XA)\cdot(UB-UA)}{(XB-XA)} + (UC-UA)\right]} \cdot ny$$

$$G$$

mit $n_z = G \cdot n_y$ in $t$:

$$nx = -\frac{\left[(YB-YA)+(UB-UA)\cdot G\right]}{(XB-XA)} \cdot ny$$

Da das Gleichungssystem nicht eindeutig lösbar ist, wird $n_y = 1$ gesetzt und man erhält:

$$\vec{n}(ny) = \begin{pmatrix} nx \\ ny \\ nz \end{pmatrix} \Rightarrow \vec{n} = \begin{pmatrix} nx \\ 1 \\ nz \end{pmatrix} \text{ und } |\vec{n}| = \sqrt{nx^2 + ny^2 + nz^2}$$

Fig. 4A

Der normierte Normalenvektor ergibt sich somit zu:

$$\vec{n}1 = \begin{pmatrix} \dfrac{nx}{|\vec{n}|} \\ \dfrac{ny}{|\vec{n}|} \\ \dfrac{nz}{|\vec{n}|} \end{pmatrix} = \begin{pmatrix} n1,x \\ n1,y \\ n1,z \end{pmatrix}$$

Die Projektionslänge in der x-y-Ebene:

$$L = \sqrt{n1,x^2 + n1,y^2}$$

Der Winkel zur y-Achse ergibt sich zu:

$$\alpha = \arctan\left(\frac{n1,x}{n1,y}\right)$$

11

**Patentansprüche**

1. Verfahren zur Bestimmung der Lage von Korrosionsstellen in bewehrtem Beton, bei dem auf der Betonoberfläche an wenigstens zwei Messorten ein Wert (UB, UC) eines am jeweiligen Messort gegebenen Spannungspotentials (UB, UC) relativ zu einem an einem Referenzort gegebenen Referenz-Spannungspotential (UA) gemessen wird, **dadurch gekennzeichnet, dass** aus den 2D-Koordinaten (XB, YB, XC, YC) zu jedem Messort oder zu jedem Messort und dem Referenzort in einer Ebene eines vorgegebenen Koordinatensystems zusammen mit dem Wert des Spannungspotentials (UA, UB, UC) am jeweiligen Ort eine 3D-Raumkoordinate (XA, YA, UA=0 / XB, YB, UB / XC, YC, UC) gebildet wird, die je einen Punkt (A,B,C) im Koordinatensystem bestimmt und aus wenigstens drei der so gebildeten Punkte (A,B,C) mathematisch zu einer durch die wenigstens drei Punkte (A, B, C) definierten Ebene (E) ein Maß für den Gradienten dieser Ebene (E) oder eine davon abhängende Größe bestimmt wird, woraus die Richtung zu einer Korrosionsstelle (K) und / oder ein Abstand zu einer Korrosionsstelle (K) berechnet wird.

2. Verfahren nach Anspruch 1, **dadurch gekennzeichnet, dass** der Abstand und/oder die Richtung bestimmt wird aus der mathematischen Projektion des normierten Normalenvektors (n1) der Ebene (E) in eine Ebene des Koordinatensystems, die in oder parallel zur Betonoberfläche liegt, wobei die Richtung durch die Erstreckung des projizierten Normalenvektor repräsentiert wird und der Abstand durch dessen Länge.

3. Verfahren nach Anspruch 2, **dadurch gekennzeichnet, dass** zu der Ebene (E) eine mathematische Repräsentation des normierten Normalenvektors (n1) auf dieser Ebene bestimmt wird.

4. Verfahren nach einem der vorherigen Ansprüche 2 oder 3, **dadurch gekennzeichnet, dass** der Normalenvektor (n1) für die Projektion in den geometrischen Schwerpunkt eines Bereichs der Ebene (E) gelegt wird, der durch einen Polygonzug (P) umgrenzt wird, dessen Eckpunkte durch die Punkte (A, B, C) gegeben ist.

5. Verfahren nach einem der vorherigen Ansprüche, **dadurch gekennzeichnet, dass** die 2D-Koordinate (XB, YB) wenigstens eines der Messorte relativ zum vorgegebenen Koordinatensystem messtechnisch bestimmt wird durch ein Navigationssystem, mittels dem der Ort einer zur Potentialmessung verwendeten Elektrode im Koordinatensystem ermittelt wird.

6. Verfahren nach einem der vorherigen Ansprüche, **dadurch gekennzeichnet, dass** die Potentialmessung an wenigstens zwei Messorten mittels einer einzigen Elektrode oder mittels mehreren Elektroden relativ zu einer Elektrode am Referenzort vorgenommen wird.

7. Verfahren nach Anspruch 6, **dadurch gekennzeichnet, dass** die Potentialmessung mittels einer Elektrodenanordnung mit mehreren zueinander ortsfesten Elektroden vorgenommen wird, wobei zumindest die Elektroden in den Messorten in elektrolytischen Kontakt gebracht werden mit der Oberfläche eines zu prüfenden bewehrten Betons.

8. Verfahren nach einem der vorherigen Ansprüche, **dadurch gekennzeichnet, dass** die Elektrodenanordnung über die Oberfläche eines zu untersuchenden Betons verfahren wird,wobei eine 2D-Koordinate wenigstens einer der Elektroden der Elektrodenanordnung relativ zum vorgegebenen Koordinatensystem ermittelt wird.

9. Verfahren nach Anspruch 8, **dadurch gekennzeichnet, dass** eine Bewegungsweite und Bewegungsrichtung wenigstens einer Elektrode ermittelt wird durch Messung der Bewegungsweiten von wenigstens zwei beabstandeten Bewegungssensoren.

10. Verfahren nach einem der vorherigen Ansprüche, **dadurch gekennzeichnet, dass** die Elektrodenanordnung entlang einer vorgegebenen Trajektorie über die Oberfläche des Betons bewegt wird oder während einer Bewegung der Elektrodenanordnung über die Oberfläche des Betons die Trajektorie registriert wird und entlang der Trajektorie mehrfach die Richtung und/oder der Abstand zu einer Korrosionsstelle bestimmt wird.

11. Verfahren nach einem der vorherigen Ansprüche, **dadurch gekennzeichnet, dass** für jeden Ort der Bestimmung von Richtung und/oder Abstand diese Richtung und/oder dieser Abstand gespeichert wird und aus den gespeicherten Werten eine Kartendarstellung generiert und zur Anzeige auf einem Display und/oder auf einem Ausdruck gebracht wird, in welcher für jeden Ort der Bestimmung von Richtung und/oder Abstand in der Karte die Richtung und/oder der Abstand dargestellt wird..

12. Verfahren nach einem der vorherigen Ansprüche, **dadurch gekennzeichnet, dass** am Ort der Bestimmung von Richtung und/oder Abstand zu einer Korrosionsstelle einem Benutzer der Elektrodenanordnung eine grafische Repräsentation von Abstand und/oder Richtung auf einer Anzeigeeinheit angezeigt wird oder durch Projektion eines Pfeils auf die Oberfläche des Betons erfolgt.

**13.** Vorrichtung zur Bestimmung der Lage von Korrosionsstellen in bewehrtem Beton, die eine Elektrodenanordnung mit mindestens einer Elektrode umfasst, die in elektrolytischen Kontakt bringbar ist mit der Oberfläche eines zu prüfenden bewehrten Betons und die dazu eingerichtet ist, mit der wenigstens einen Elektrode Spannungspotentiale (UB, UC) an mehreren Messorten relativ zu einem Referenz-Spannungspotential (UA) am Referenzort einer Elektrode zu messen, **dadurch gekennzeichnet, dass** sie weiterhin eingerichtet ist, aus den 2D-Koordinaten (XB, YB, XC, YC) zu jedem Messort, oder zu jedem Messort und dem Referenzort (XA, YA) in einer Ebene in oder parallel zur Betonoberfläche zusammen mit einem das jeweilige Potential (UB, UC) an diesem Ort repräsentierenden Wert eine 3D-Raumkoordinate zu bilden, die jeweils einen Punkt (A, B, C) in Raum des Koordinatensystems definiert und durch Ablauf einer Software in einem Datenverarbeitungsteil der Vorrichtung aus wenigstens drei der so gebildeten Punkte (A,B,C) mathematisch zu einer durch die wenigstens drei Punkte (A, B, C) definierten Ebene (E) ein Maß für den Gradienten dieser Ebene (E) oder eine davon abhängende Größe zu bestimmen und daraus die Richtung zu einer Korrosionsstelle (K) und / oder einen Abstand zu einer Korrosionsstelle (K) zu berechnen.

**14.** Vorrichtung nach Anspruch 13, **dadurch gekennzeichnet, dass** die Elektrodenanordnung wenigstens zwei zueinander ortsfeste Elektroden umfasst, welche die Messorte definieren.

**15.** Vorrichtung nach Anspruch 13 oder 14, **dadurch gekennzeichnet, dass** sie aufweist:

a. eine Anzeigevorrichtung, die eingerichtet ist, einem Nutzer eine grafische Repräsentation des Abstandes und/oder der Richtung darzustellen auf einem Display der Anzeigevorrichtung oder durch optische Projektion eines Pfeils auf die Betonoberfläche und/oder
b. eine Datenerfassungseinheit, in welcher in Abhängigkeit der Koordinaten der Elektrodenanordnung im gegebenen Koordinatensystem der Abstand und/oder die Richtung gespeichert und / oder in eine grafische Kartendarstellung überführt ist.

**Claims**

**1.** Method for determining the position of corrosion sites in reinforced concrete, in which, at at least two measurement locations on the concrete surface, a value (UB, UC) of a voltage potential (UB, UC) given at the respective measurement location is measured relative to a reference voltage potential (UA) given at a reference location, **characterized in that** a 3D spatial coordinate (XA, YA, UA = 0/XB, YB, UB/XC, YC, UC) is formed from the 2D coordinates (XB, YB, XC, YC) for each measurement location or for each measurement location and the reference location in a plane of a predetermined coordinate system together with the value of the voltage potential (UA, UB, UC) at the respective location, said 3D spatial coordinate determining respectively one point (A, B, C) in the coordinate system, and, from at least three of the points (A, B, C) formed thus, a measure for the gradient of a plane (E) or a variable depending thereon is determined in relation to this plane (E) defined mathematically by the at least three points (A, B, C), from which the direction to a corrosion site (K) and/or a distance from a corrosion site (K) is calculated.

**2.** Method according to Claim 1, **characterized in that** the distance and/or the direction is determined from the mathematical projection of the normalized normal vector (n1) of the plane (E) in a plane of the coordinate system lying in, or parallel to, the concrete surface, wherein the direction is represented by the extent of the projected normal vector and the distance is represented by the length thereof.

**3.** Method according to Claim 2, **characterized in that,** in relation to the plane (E), a mathematical representation of the normalized normal vector (n1) on this plane is determined.

**4.** Method according to either of the preceding Claims 2 and 3, **characterized in that** the normal vector (n1) for the projection is placed in the geometric centroid of a region of the plane (E) which is surrounded by a polygonal chain (P), the corners of which are given by the points (A, B, C).

**5.** Method according to one of the preceding claims, **characterized in that** the 2D coordinate (XB, YB) of at least one of the measurement locations relative to the predetermined coordinate system is determined by metrological means by way of a navigation system used to ascertain the location of an electrode, used to measure the potential, in the coordinate system.

6. Method according to one of the preceding claims, **characterized in that** the potential measurement is undertaken at at least two measurement locations by means of a single electrode or by means of a plurality of electrodes relative to an electrode at the reference location.

7. Method according to Claim 6, **characterized in that** the potential measurement is undertaken by means of an electrode arrangement with a plurality of electrodes that are fixed in relation to one another, wherein at least the electrodes at the measurement locations are brought into electrolytic contact with the surface of reinforced concrete to be tested.

8. Method according to one of the preceding claims, **characterized in that** the electrode arrangement is displaced over the surface of concrete to be tested, wherein a 2D coordinate of at least one of the electrodes of the electrode arrangement is ascertained relative to the predetermined coordinate system.

9. Method according to Claim 8, **characterized in that** a range of movement and a movement direction of at least one electrode is ascertained by measuring the ranges of movement of at least two spaced apart movement sensors.

10. Method according to one of the preceding claims, **characterized in that** the electrode arrangement is moved along a predetermined trajectory over the surface of the concrete or the trajectory is registered during a movement of the electrode arrangement over the surface of the concrete and the direction to and/or distance from a corrosion site is determined a number of times along the trajectory.

11. Method according to one of the preceding claims, **characterized in that,** for each location where direction and/or distance is determined, this direction and/or this distance is stored and a map representation is generated from the stored values and displayed on a display and/or a printout, in which the direction and/or the distance is depicted for each location in the map where direction and/or distance is determined.

12. Method according to one of the preceding claims, **characterized in that,** at the location where direction and/or distance to a corrosion site is determined, a graphical representation of distance and/or direction is displayed to a user of the electrode arrangement on a display unit or said graphical representation is effected by projecting an arrow onto the surface of the concrete.

13. Apparatus for determining the location of corrosion sites in reinforced concrete, comprising an electrode arrangement with at least one electrode, which may be brought into electrolytic contact with the surface of reinforced concrete to be tested and which is configured to measure, by means of at least one electrode, voltage potentials (UB, UC) at a plurality of measurement locations relative to a reference voltage potential (UA) at the reference location of an electrode, **characterized in that** it is further configured to form a 3D spatial coordinate from the 2D coordinates (XB, YB, XC, YC) for each measurement location or for each measurement location and the reference location (XA, YA) in a plane in, or parallel to, the concrete surface together with a value representing the respective potential (UB, UC) at this location, said 3D spatial coordinate respectively defining a point (A, B, C) in the space of the coordinate system, and, by the at least three points (A, B, C) by running software in a data processing part of the apparatus, to determine a measure for the gradient of a plane (E) or a variable dependent thereon from at least three of the points (A, B, C) formed thus in relation to this plane (E) defined mathematically and to calculate the direction to a corrosion site (K) and/or a distance from a corrosion site (K) therefrom.

14. Apparatus according to Claim 13, **characterized in that** the electrode arrangement comprises at least two electrodes which are fixed in relation to one another and which define the measurement locations.

15. Apparatus according to Claim 13 or 14, **characterized in that** it comprises:

    a. a display apparatus configured to display to a user a graphical representation of the distance and/or direction on a display of the display apparatus or by an optical projection of an arrow onto the concrete surface and/or
    b. a data acquisition unit, in which, in a manner dependent on the coordinates of the electrode arrangement in the given coordinate system, the distance and/or the direction are stored and/or converted into a graphical map representation.

**Revendications**

1. Procédé de détermination de la position de points de corrosion dans du béton armé, avec lequel, en au moins deux emplacements de mesure, une valeur (UB, UC) d'un potentiel de tension (UB, UC) donné à l'emplacement de mesure correspondant par rapport à un potentiel de tension de référence (UA) donné à l'emplacement de mesure correspondant est mesurée sur la surface du béton, **caractérisé en ce qu'**une coordonnée spatiale 3D (XA, YA, UA=0 : XB, YB, UB / XC, YC, UC) est formée à partir des coordonnées 2D (XB, YB, XC, YC) pour chaque emplacement de mesure ou pour chaque emplacement de mesure et l'emplacement de référence dans un plan d'un système de coordonnées prédéfini conjointement avec la valeur du potentiel de tension (UA, UB, UC) à l'emplacement correspondant, laquelle détermine respectivement un point (A, B, C) dans le système de coordonnées, et une cote pour les gradients d'un plan (E), défini par au moins trois points (A, B, C), ou une grandeur qui en dépend est déterminée mathématiquement pour ce plan (E) à partir des au moins trois points (A, B, C) ainsi formés, à partir de quoi la direction vers un point de corrosion (K) et/ou un écart d'un point de corrosion (K) sont calculés.

2. Procédé selon la revendication 1, **caractérisé en ce que** l'écart et/ou la direction sont déterminés à partir de la projection mathématique du vecteur normal (n1) normalisé du plan (E) dans un plan du système de coordonnées qui est à l'intérieur ou parallèle à la surface du béton, la direction étant représentée par l'extension du vecteur normal projeté et l'écart par sa longueur.

3. Procédé selon la revendication 2, **caractérisé en ce que** pour le plan (E), une représentation mathématique du vecteur normal (n1) normalisé est déterminée sur ce plan.

4. Procédé selon l'une des revendications précédentes 2 ou 3, **caractérisé en ce que** le vecteur normal (n1) est placé, pour la projection, dans le barycentre géométrique d'une zone du plan (E) qui est entouré par un tracé polygonal (P) dont les coins sont donnés par les points (A, B, C).

5. Procédé selon l'une des revendications précédentes, **caractérisé en ce que** la coordonnée 2D (XB, YB) d'au moins l'un des emplacements de mesure par rapport au système de coordonnées prédéfini est déterminée de manière métrologique par un système de navigation à l'aide duquel est défini l'emplacement dans le système de coordonnées d'une électrode utilisée pour la mesure de potentiel.

6. Procédé selon l'une des revendications précédentes, **caractérisé en ce que** la mesure de potentiel est effectuée en au moins deux emplacements de mesure au moyen d'une électrode unique ou au moins de plusieurs électrodes par rapport à une électrode à l'emplacement de référence.

7. Procédé selon la revendication 6, **caractérisé en ce que** la mesure de potentiel est effectuée au moyen d'un arrangement d'électrodes comprenant plusieurs électrodes fixes les unes par rapport aux autres, au moins les électrodes dans les emplacements de mesure étant mises en contact électrolytique avec la surface d'un béton armé à contrôler.

8. Procédé selon l'une des revendications précédentes, **caractérisé en ce que** l'arrangement d'électrodes est déplacé au-dessus de la surface d'un béton à analyser, une coordonnée 2D d'au moins l'une des électrodes de l'arrangement d'électrodes étant déterminée par rapport au système de coordonnées prédéfini.

9. Procédé selon la revendication 8, **caractérisé en ce qu'**une amplitude de déplacement et une direction de déplacement d'au moins une électrode sont déterminées par mesure des amplitudes de déplacement d'au moins deux capteurs de mouvement espacés.

10. Procédé selon l'une des revendications précédentes, **caractérisé en ce que** l'arrangement d'électrodes est déplacé le long d'une trajectoire prédéfinie sur la surface du béton ou la trajectoire est enregistrée pendant un mouvement de l'arrangement d'électrodes au-dessus de la surface du béton, et la direction vers et/ou l'écart par rapport à un point de corrosion sont déterminés plusieurs fois le long de la trajectoire.

11. Procédé selon l'une des revendications précédentes, **caractérisé en ce que** pour chaque emplacement de détermination de la direction et/ou de l'écart, cette direction et/ou cet écart est mis(e) en mémoire et une représentation cartographique est générée à partir des valeurs mémorisées et affichée sur un écran et/ou sur une impression, représentation dans laquelle la direction et/ou l'écart sont représentés dans la carte pour chaque emplacement de détermination de la direction et/ou de l'écart.

**12.** Procédé selon l'une des revendications précédentes, **caractérisé en ce qu'**à l'emplacement de détermination de la direction vers et/ou de l'écart d'un point de corrosion, une représentation graphique de l'écart et/ou de la direction est affichée sur une unité d'affichage à l'attention d'un utilisateur de l'arrangement d'électrodes ou est effectuée par projection d'une flèche sur la surface du béton.

**13.** Dispositif de détermination de la position de points de corrosion dans du béton armé, lequel comprend un arrangement d'électrodes comportant au moins une électrode, lequel peut être amené en contact électrolytique avec la surface d'un béton armé à analyser et lequel est conçu pour mesurer, avec l'au moins une électrode, des potentiels de tension (UB, UC) à plusieurs emplacements de mesure par rapport à un potentiel de tension de référence (UA) à l'emplacement de référence d'une électrode, **caractérisé en ce qu'**il est en outre conçu pour former une coordonnée spatiale 3D à partir des coordonnées 2D (XB, YB, XC, YC) pour chaque emplacement de mesure, ou pour chaque emplacement de mesure et l'emplacement de référence (XA, YA) dans un plan ou parallèlement à la surface du béton conjointement avec une valeur représentant le potentiel (UB, UC) respectif à cet emplacement, laquelle définit respectivement un point (A, B, C) dans l'espace du système de coordonnées, et pour déterminer mathématiquement, par exécution d'un logiciel dans une unité de traitement de données du dispositif, une cote pour les gradients d'un plan (E), défini par au moins trois points (A, B, C), ou une grandeur qui en dépend pour ce plan (E) à partir des au moins trois points (A, B, C) ainsi formés, et à partir de là calculer la direction vers un point de corrosion (K) et/ou un écart d'un point de corrosion (K).

**14.** Dispositif selon la revendication 13, **caractérisé en ce que** l'arrangement d'électrodes comprend au moins deux électrodes fixes l'une par rapport à l'autre, lesquelles définissent les emplacements de mesure.

**15.** Dispositif selon la revendication 13 ou 14, **caractérisé en ce qu'**il possède :

    a. un dispositif d'affichage qui est conçu pour représenter à l'attention d'un utilisateur une représentation graphique de l'écart et/ou de la direction sur un afficheur du dispositif d'affichage ou par projection optique d'une flèche sur la surface du béton et/ou
    b. une unité d'acquisition de données dans laquelle l'écart et/ou la direction sont mis en mémoire et/ou transférés dans une représentation cartographique graphique en fonction des coordonnées de l'arrangement d'électrodes dans le système de coordonnées donné.

Fig. 1

Korrosionsstelle

Fig. 2

- - - - - Stromlinien
——— Isopotentiallinien I

Fig 3

Fig. 4.

**IN DER BESCHREIBUNG AUFGEFÜHRTE DOKUMENTE**

**In der Beschreibung aufgeführte Patentdokumente**

- WO 2007096668 A1
- US 4758324 A
- GB 2157441 A

**In der Beschreibung aufgeführte Nicht-Patentliteratur**

- Development of a calculation procedure for the statistical interpretation of the results of potential mapping on reinforced concrete structure. **GULIKERS J.** Materials and Corrosion. WILEY VCH Verlag GmbH & Co. KGaA, 2009, vol. 60